# EUROPEAN PATENT APPLICATION

(11) **EP 2 175 354 A1**
(43) Date of publication of application: **14.04.2010**
(21) Application number: 08166049.0
(22) Date of filing: 07.10.2008
(51) Int. Cl.: G06F 3/048

(54) **Portable electronic device and method of controlling same**

(71) Applicant: Research In Motion Limited, Waterloo, Ontario N2L 3W8 (CA)
(72) Inventor: Yach, David, Waterloo, Ontario N2K 2N1 (CA); Langlois, Michael, Almonte, Ontario J0A 1A0 (CA); Bukurak, David, Ottawa, Ontario K2A 0K4 (CA); Mujkic, Alen, Mississauga, Ontario L5J 2E3 (CA); Griffin, Jason, T., Kitchener, Ontario N2P 2L3 (CA); Wood, Todd, Guelph, Ontario N1H 3Z6 (CA); Lazaridis, Mihal, Waterloo Ontario N2T 2K1 (CA); Major, Harry, Richmond, Waterloo, Ontario N2L 6N4 (CA)
(74) Representative: MERH-IP Matias Erny Reichl Hoffmann

(57) **Abstract**

A method of controlling a portable electronic device (20) that has a touch screen display (38) includes rendering a graphical user interface including a plurality of selectable features (124), detecting a first touch event (G) at a first location on the touch screen display, detecting a second touch event (H) at a second location on the touch screen display during the first touch event, and selecting ones of the plurality of selectable features located in an area having boundaries (126,128,130,132) defined by the first location and the second location to define a group of selected features.

## Description

The present disclosure relates generally to a portable electronic device including a touch screen display and control of the electronic device.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Portable electronic devices such as PDAs or smart telephones are generally intended for handheld use and ease of portability. Smaller devices are generally desirable for portability. A touch screen display for input and output is particularly useful on such handheld devices as such handheld devices are small and are therefore limited in space available for user input and output devices. Further, the screen content on the touch screen display devices can be modified depending on the functions and operations being performed. Even still, these devices have a limited area for rendering content on the touch screen display and for rendering features or icons, for example, for user interaction. With continued demand for decreased size of portable electronic devices, touch screen displays and available space on the portable electronic device for additional input devices continue to decrease in size.

Improvements in touch screen devices are therefore desirable.

### GENERAL

According to one aspect there is preferably provided a method of controlling a portable electronic device that has a touch screen display. The method may comprise rendering a graphical user interface including a plurality of selectable features, detecting a first touch event at a first location on the touch screen display, detecting a second touch event at a second location on the touch screen display, and selecting ones of the plurality of selectable features located in an area having boundaries defined by the first location and the second location to define a group of selected features. In the preferred embodiment the second touch event occurs during the first touch event. Each touch event could be a finger or other pointing device (e.g. stylus) touching the screen. A second touch event occurring during the first touch event could be the result of two different fingers or a finger and a pointing device or two pointing devices touching the same screen at two different locations.

According to another aspect there is preferably provided a portable electronic device. The portable electronic device may comprise a touch screen display and function components. The functional components may comprise a processor connected to the touch screen display, and a memory device for storage of computer-readable program code executable by the processor for rendering a graphical user interface including a plurality of selectable features on the touch screen display, detecting a first touch event at a first location on the touch screen display, detecting a second touch event at a second location on the touch screen display, and selecting ones of the plurality of selectable features located in an area having boundaries defined by the first location and the second location to define a group of selected features.

According to another aspect, there is preferably provided a computer-readable medium. The computer-readable medium preferably has computer-readable code embodied therein for execution by a processor for rendering a graphical user interface including a plurality of selectable features on a touch screen display, detecting a first touch event at a first location on the touch screen display, detecting a second touch event at a second location on the touch screen display, and selecting ones of the plurality of selectable features located in an area having boundaries defined by the first location and the second location to define a group of selected features.

### BRIEF DESCRIPTION OF THE DRAWINGS

Embodiments of the present disclosure will now be described, by way of example only, with reference to the attached Figures, wherein:

Figure 1 is a block diagram of a portable electronic device according to one example;

Figure 2 is a front view of an exemplary portable electronic shown in a portrait orientation;

Figure 3 is a simplified sectional side view of the portable electronic device of Figure 2 (not to scale), with a switch shown in a rest position;

Figure 4 is a flow chart showing a method for controlling an electronic device according to an embodiment; and

Figures 5 to 22 are front views of the portable electronic device of Figure 2 depicting GUIs for user interaction.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a portable electronic device including a touch screen display and control of the portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

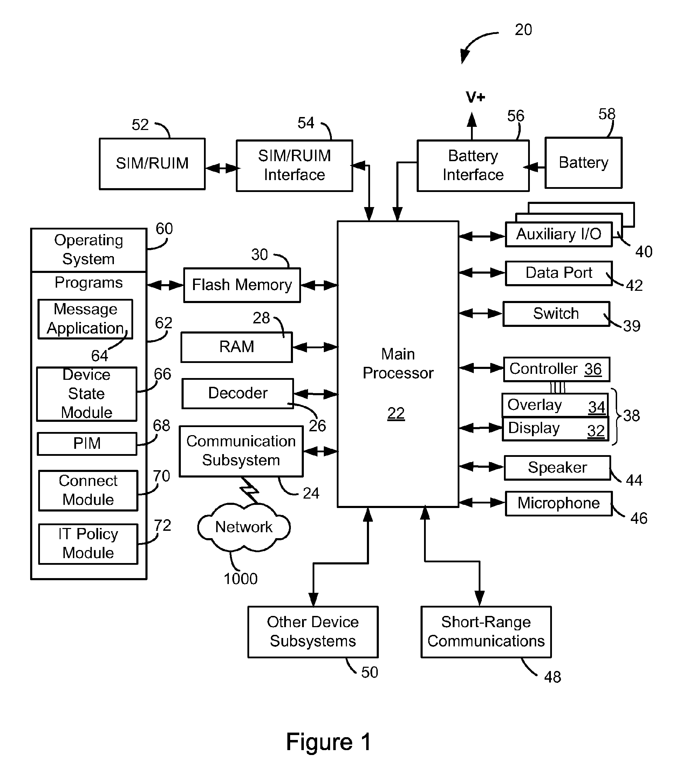

Referring first to Figure 1, there is shown therein a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 1000. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide. New standards such as Enhanced Data GSM Environment (EDGE) and Universal Mobile Telecommunications Service (UMTS) are believed to have similarities to the network behavior described herein, and it will also be understood by persons skilled in the art that the embodiments described herein are intended to use any other suitable standards that are developed in the future. The wireless link connecting the communication subsystem 24 with the wireless network 1000 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 1000 associated with portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The processor 22 also interacts with additional subsystems such as a Random Access Memory (RAM) 28, a flash memory 30, a display 32 with a touch-sensitive overlay 34 that together make up a touch screen display 38, an electronic controller 36 connected to the touch-sensitive overlay 34, a switch 39, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 1000, and device-resident functions such as a calculator or task list.

The portable electronic device 20 can send and receive communication signals over the wireless network 1000 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 1000. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 1000 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 62 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. The PIM application has the ability to send and receive data items via the wireless network 1000. PIM data items may be seamlessly integrated, synchronized, and updated via the wireless network 1000 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APls that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 1000, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 1000. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and input to the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch screen display 38, and possibly the auxiliary I/O subsystem 40. The auxiliary I/O subsystem 40 may include devices such as: a mouse, track ball, infrared fingerprint detector, or a roller wheel with dynamic button pressing capability. A composed item may be transmitted over the wireless network 1000 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

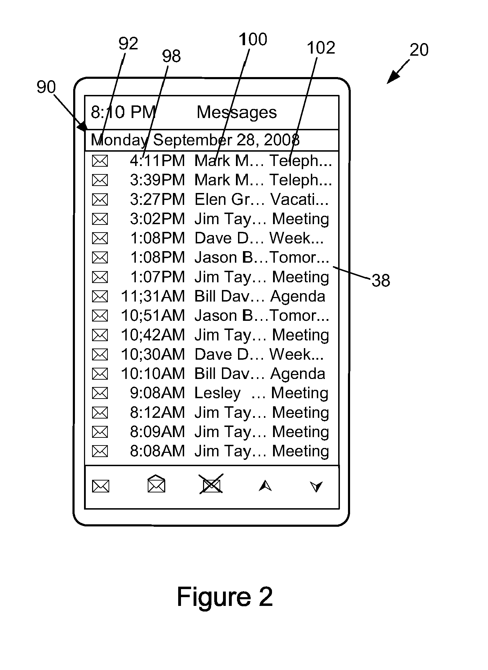

Reference is now made to Figure 2, which shows a front view of an exemplary portable electronic device 20 in portrait orientation. The portable electronic device 20 includes a housing 74 that houses the internal components that are shown in Figure 1 and frames the touch screen display 38 such that the touch screen display 38 is exposed for user-interaction therewith when the portable electronic device 20 is in use.

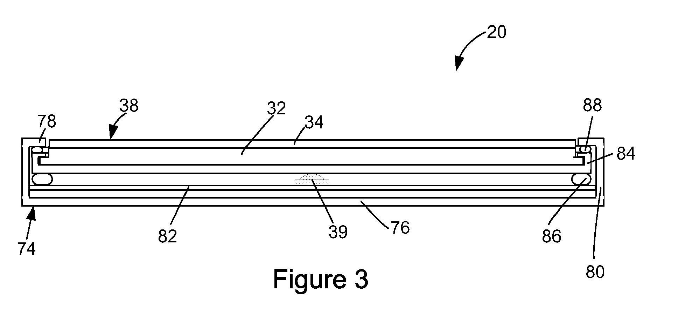

As best shown in Figure 3, the housing 74 includes a back 76, a frame 78, which frames the touch screen display 38, sidewalls 80 that extend between and generally perpendicular to the back 76 and the frame 78, and a base 82 that is spaced from and generally parallel to the back 76. The base 82 can be any suitable base and can include, for example, a printed circuit board or flex circuit board. The back 76 includes a plate (not shown) that is releasably attached for insertion and removal of, for example, the battery 58 and the SIM/RUIM card 52 described above. It will be appreciated that the back 76, the sidewalls 80 and the frame 78 can be injection molded, for example. In the exemplary portable electronic device 20 shown in Figure 2, the frame 78 is generally rectangular with rounded corners although other shapes are possible.

The display 32 and the touch-sensitive overlay 34 can be supported on a support tray 84 of suitable material such as magnesium for providing mechanical support to the display 32 and touch-sensitive overlay 34. The display 32 and touch-sensitive overlay 34 are biased away from the base 82, toward the frame 78 by biasing elements 86 such as gel pads between the support tray 84 and the base 82. Compliant spacers 88, which can also be in the form of gel pads for example, are located between an upper portion of the support tray 84 and the frame 78. The touch screen display 38 is moveable within the housing 74 as the touch screen display 38 can be moved toward the base 82, thereby compressing the biasing elements 86. The touch screen display 38 can also be pivoted within the housing 74 with one side of the touch screen display 38 moving toward the base 82, thereby compressing the biasing elements 86 on the same side of the touch screen display 38 that moves toward the base 82.

In the present example, the switch 39 is supported on one side of the base 82 which can be printed circuit board while the opposing side provides mechanical support and electrical connection for other components (not shown) of the portable electronic device 20. The switch 39 can be located between the base 82 and the support tray 84. The switch 39, which can be a mechanical dome-type switch, for example, can be located in any suitable position such that displacement of the touch screen display 38 resulting from a user pressing the touch screen display 38 with sufficient force to overcome the bias and to overcome the actuation force for the switch 39, depresses and actuates the switch 39. In the present embodiment the switch 39 is in contact with the support tray 84. Thus, depression of the touch screen display 38 by user application of a force thereto, causes actuation of the switch 39, thereby providing the user with a positive tactile quality during user interaction with the user interface of the portable electronic device 20. The switch 39 is not actuated in the rest position shown in Figure 3, absent applied force by the user. It will be appreciated that the switch 39 can be actuated by pressing anywhere on the touch screen display 38 to cause movement of the touch screen display 38 in the form of movement parallel with the base 82 or pivoting of one side of the touch screen display 38 toward the base 82. The switch 39 is connected to the processor 22 and can be used for further input to the processor when actuated. Although a single switch is shown any suitable number of switches can be used and can be located in any suitable position. Further, a multiple dome switch or switches can be used and can be located in any suitable position.

The touch screen display 38 can be any suitable touch screen display such as a capacitive touch screen display, resistive or any other suitable touch screen display. A capacitive touch screen display 38, for example, includes the display 32 and the touch-sensitive overlay 34, in the form of a capacitive touch-sensitive overlay 34. It will be appreciated that the capacitive touch-sensitive overlay 34 includes a number of layers in a stack and is fixed to the display 32 via a suitable optically clear adhesive. The layers can include, for example a substrate fixed to the LCD display 32 by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

In the present example, the X and Y location of a touch event are both determined with the X location determined by a signal generated as a result of capacitive coupling with one of the touch sensor layers and the Y location determined by the signal generated as a result of capacitive coupling with the other of the touch sensor layers. Each of the touch-sensor layers provides a signal to the controller 36 as a result of capacitive coupling with a suitable object such as a finger of a user or a conductive object held in a bare hand of a user resulting in a change in the electric field of each of the touch sensor layers. The signals represent the respective X and Y touch location values. It will be appreciated that other attributes of the user's touch on the touch screen display 38 can be determined. For example, the size and the shape of the touch on the touch screen display 38 can be determined in addition to the location (X and Y values) based on the signals received at the controller 36 from the touch sensor layers.

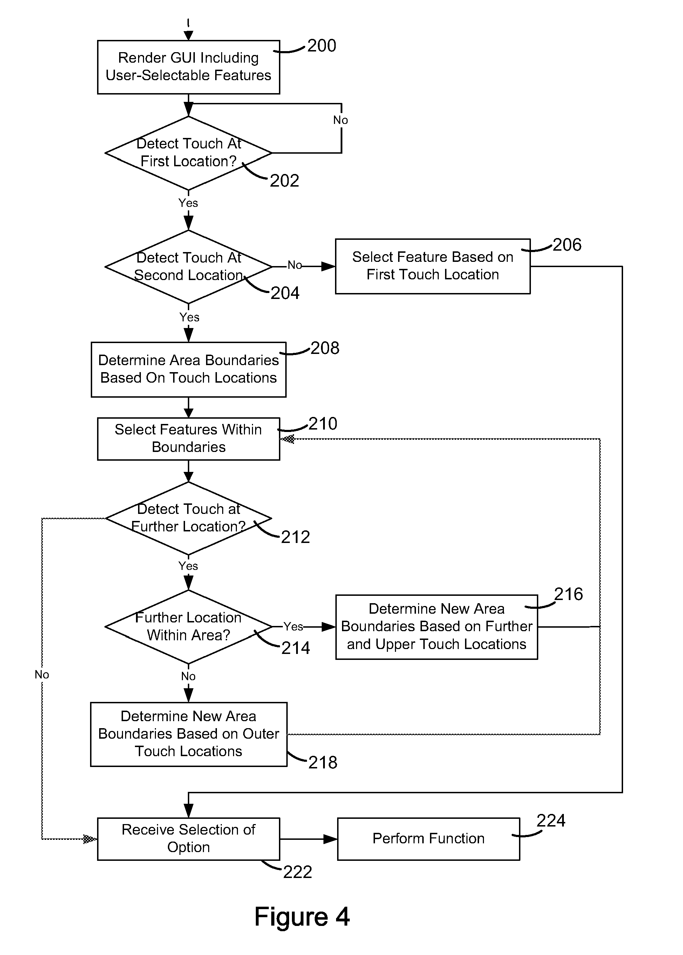

Reference is now made to Figure 4 to describe a method of controlling a portable electronic device in accordance with one embodiment. It will be appreciated that the steps of Figure 4 can be carried out by routines or subroutines of software executed by the processor 22. Coding of software for carrying out such steps is well within the scope of a person of ordinary skill in the art having regard to the present description.

In general, the method of controlling the portable electronic device 20 having the touch screen display 38 includes rendering a graphical user interface including a plurality of selectable features, detecting a first touch event at a first location on the touch screen display 38, detecting a second touch event at a second location on the touch screen display 38, and selecting ones of the plurality of selectable features located in an area having boundaries defined by the first location and the second location to define a group of selected features

A graphical user interface is displayed on the display 32 and includes the user-selectable features (step 200). The user-selectable features can include, for example, a list of messages, contacts, calendar events, pictures, text or any other suitable features. The graphical user interface can be provided in any suitable application, such as the message application 64 or any other suitable application.

If a first touch event is detected (step 202), the method proceeds to step 204. Such a touch event can be determined upon a user touch at the touch screen display 38 at any one of the features, such as a message or other feature. Signals are sent from the touch-sensitive overlay 34 to the controller 36 when a suitable object such as a finger or other conductive object held in the bare hand of a user, is detected. Thus, the first touch event is detected and the X and Y location of the touch are determined (step 202). If no touch event is detected, the processor 22 continues to monitor for a touch event on the touch screen display 38.

Next it is determined if a second touch event is detected during the occurrence of the first touch event (step 204) and, if so, the method continues to step 208. Thus, a second touch event can be determined upon a user touch at the touch screen display 38. This could for example be the result of two different fingers touching the same screen at two different locations. Thus, the screen is touched at a first location (first touch event) and the screen is touched at a second location (second touch event). The second touch occurs while the first finger is still in contact with the touch screen. Signals are sent from the touch-sensitive overlay 34 to the controller 36 when the second touch event occurs at a second location while the first touch event is maintained at the first location. Thus, the second touch event at the second location is detected and the X and Y location of the touch are determined (step 204).

If, on the other hand, the first touch event ends by the user lifting his or her finger from the touch-sensitive overlay 34 of the touch screen 38, for example and a second touch event is not detected, the feature corresponding to the X and Y location of the first touch event is determined and selected (step 206). Thus, the feature can be highlighted or otherwise indicated as selected on the display 32. Selection of an option can be received (step 222) in any suitable manner and a function performed based on the selection received (step 224). For example, a selection of an option can be received upon user-selection of an option from a submenu list of options. Such a submenu list of options can depend on the application and thus the feature selected. Such options can include, for example, Cut, Paste, Save, Delete, or any other suitable option.

As indicated it is determined at step 204 if a second touch event is detected and if so, the method continues to step 208 where area boundaries are determined based on the X and Y location of the first touch event and the X and Y location of the second touch event. The features that are located within the boundaries determined at step 208 are selected (step 210). The selected features can be highlighted or indicated as selected on the display 32 in any suitable manner.

It is then determined if a further touch event is detected (step 212) and, if so, the method proceeds to step 214. The further touch event can be determined upon a user touch at the touch screen display 38 at any one of the features. Signals are sent from the touch-sensitive overlay 34 to the controller 36 when a suitable object such as a finger or other conductive object held in the bare hand of a user, is detected. Thus, the further touch event is detected and the X and Y location of the touch are determined (step 212). If no further touch event is detected, the method proceeds to step 222.

It is then determined if the location of the further touch event falls within the area that has boundaries based on the locations of the first and second touch events as determined at step 208 (step 214). If the X and Y location of the further touch event is determined to fall within the boundaries as determined at step 208, new area boundaries are determined based on the X and Y location of the further touch event and the X and Y location of the upper-most touch event (step216). Thus, if the first touch event is located closer to the top of the display in the rendered screen orientation, the boundaries are set based on the X and Y locations of the further touch event and the first touch event. Alternatively, if the second touch event is located closer to the top of the display in the rendered screen orientation, the boundaries are set based on the X and Y locations of the further touch event and the second touch event. The features that are located within the boundaries determined at step 216 are then selected as the method proceeds to step 210. Again, the selected features can be highlighted or indicated as selected on the display 32 in any suitable manner. Features previously selected that no longer fall within the new area boundaries as determined at step 216 are therefore deselected.

If, on the other hand, the location of the further touch event does not fall within the area with boundaries set based on the locations of the first and second touch events, it is therefore determined that the further touch event falls outside of the boundaries and new area boundaries are determined based on the X and Y location of the further touch event and one of the first and second touch events (step 218). In particular, if the further touch event falls outside the area determined at step 208, a new area is determined based on the X and Y location of the further touch event and the X and Y location of the one of the first touch event and second touch event that is located farthest from the further touch event detected at step 212. The features that are located within the new boundaries determined at step 218 are then selected as the method proceeds to step 210. Again, the selected features can be highlighted or indicated as selected on the display 32 in any suitable manner. Features that were not previously selected and that fall within the new area boundaries as determined at step 218 are therefore selected.

If no further touch locations are determined, and instead, a selection of an option is received at step 222, the selected option is determined and the function performed based on the selection received (step 224). As indicated for exemplary purposes above, a selection of an option can be received upon user-selection of one option from a submenu list of options. Such a submenu list of options can depend on the application and thus the feature selected. Such options can include, for example, Cut, Paste, Save, Delete, or any other suitable option. It will be appreciated that after selecting the features within the boundaries determined by the location of touches, determination of a further touch location or receipt of selection of an option is awaited.

The process shown and described with reference to Figure 4 is simplified for the purpose of the present explanation and other steps and substeps may be included. Alternatively, some of the steps and substeps may be excluded.

Reference is again made to Figure 2 and to Figures 4 to 11 to describe examples of a method of controlling the portable electronic device 20. In the exemplary screen shown in Figure 2, the touch screen display 38 includes a number of selectable features. In the present example, the selectable features include a list of messages 90 sent from the portable electronic device 20 and received at the portable electronic device 20. The list of messages 90 can include any suitable message types such as email messages, Short Message Service (SMS) messages, Multimedia Messaging Service (MMS) messages, Personal Identification Number (PIN messages), and any other suitable message types as well as any combination of message types. In the present example, the list is in time and date order and includes several fields such as a date field 92 under which all messages sent and received on the date indicated in the date field 92 are listed. Each message in the list of messages 90 sent and received includes a number of fields for identification. These fields can include, for example, a time field 98, a correspondent field 100, and a subject field 102. It will be appreciated that other suitable information fields are possible as further suitable fields can be included in the list of messages or suitable fields can be excluded from the list of messages 90. Regardless of the fields included, the list of messages can be provided in the message application 64, for example, upon execution of the message application 64 resulting from receipt of a user-selection of, for example, the message application 64 from a menu list of selectable applications.

As described, a user's touch on the touch screen display 38 is determined by determining the X and Y touch location and user-selected input is determined based on the X and Y touch location and the application executed by the processor 22. In the exemplary screen shown in the view of Figure 2, the application provides the list of messages 90 and each message in the list can be selected for opening for viewing content, saving to a folder, or deleting, for example, by touching on the touch screen display 38 (step 200). Thus, each message is selectable by the user based on the X and Y touch location and the application.

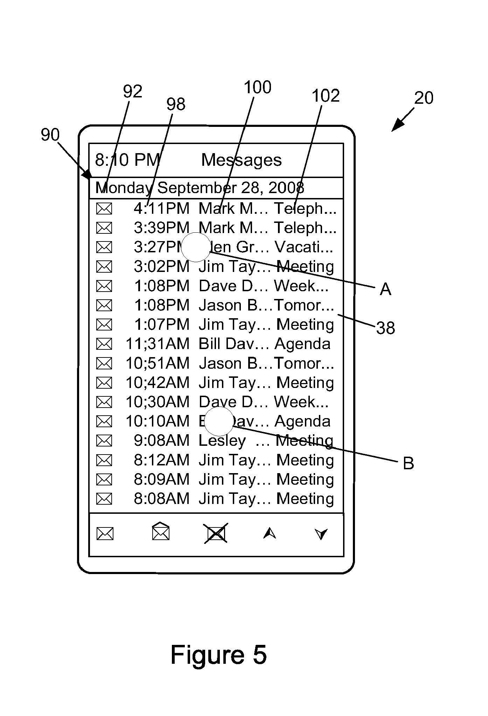

A first touch is detected, at any location on the touch screen display 38. The touch event is detected upon a user touch at the touch screen display 38 at, for example, the location labeled "A" in Figure 5. Signals are sent from the touch-sensitive overlay 34 to the controller 36 and the X and Y location of the touch are determined (step 202).

Next, a second touch event is detected at a second location on the touch screen display 38 while touch contact at the first touch location is maintained (step 208). For exemplary purposes, the location of the second touch event is at the location labeled "B" in Figure 5. Signals are again sent from the touch-sensitive overlay 34 to the controller 36 when the second touch event occurs at a second location while the first touch event is maintained at the first location. Thus, the second touch event at the second location is detected and the X and Y location of the touch are determined (step 204).

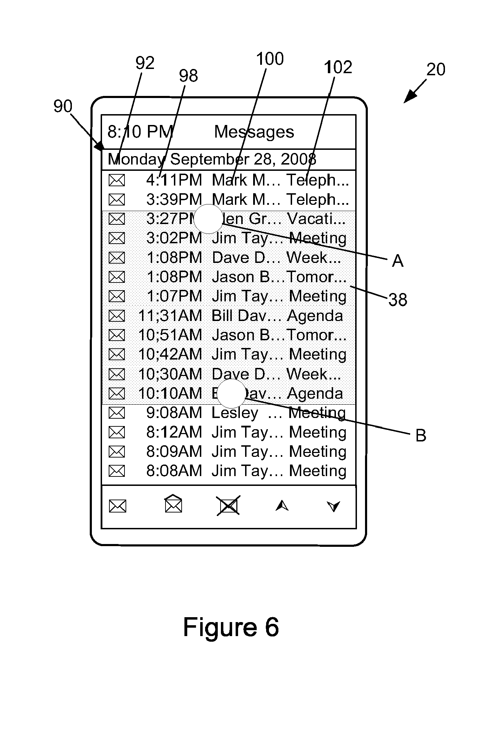

The area boundaries are then determined based on the X and Y location of the first touch event and the X and Y location of the second touch event. In the present example, the boundaries are set by the X and Y locations of both touch events and all of the messages in the list of messages 90 that are located from the first touch location to the second touch location, inclusive, are selected (step 210). A visual indicator can be rendered for indicating the selected messages. In the present example, each of the selected messages is highlighted as shown in Figure 6.

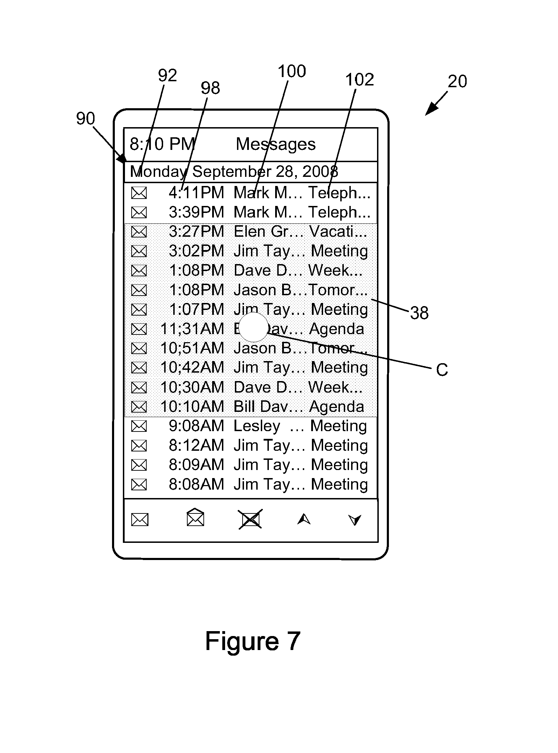

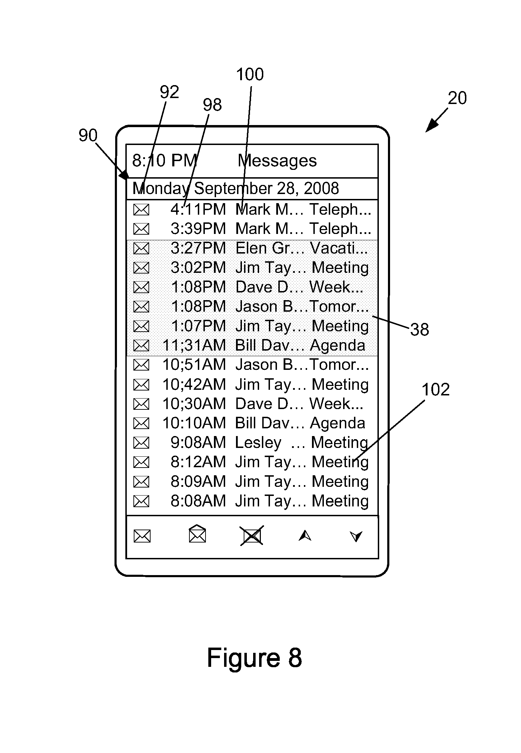

For the purpose of the present example, a further touch event is detected and the X and Y location of the touch are determined (step 212). For exemplary purposes, the location of the further touch event is labeled "C" in Figure 7. The X and Y location of the further touch is compared to the boundaries determined at step 208 and the location is determined to fall within the boundaries determined at step 208 (step 214) and therefore, new area boundaries are determined based on the X and Y location of the further touch event and the X and Y location of the upper-most touch event in the rendered orientation, which in the present embodiment is the first touch event (step 216). The features that are located within the new boundaries determined at step 216 are then selected as the method proceeds to step 210. Again, the selected features are highlighted on the display 32. The features previously selected that no longer fall within the new area boundaries as determined at step 216 are therefore deselected as shown in Figure 8.

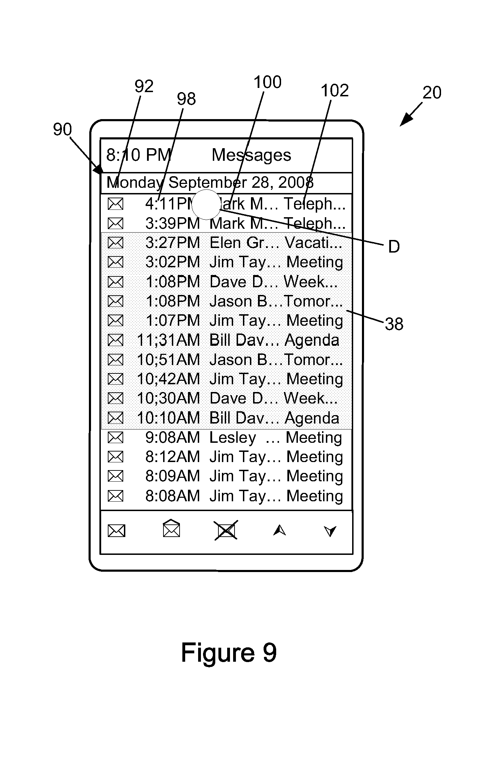

In another example, the further touch event from Figure 6 is detected and the X and Y location of the touch are determined (step 212). For the purpose of the present example, the location of the further touch is labeled "D" in Figure 9 and, as shown, the location of the further touch event does not fall within the area with boundaries set based on the locations of the first and second touch events. It is therefore determined that the further touch event falls outside of the boundaries and new area boundaries are determined based on the X and Y location of the further touch event and the farthest one of the first touch event and the second touch event (step 218). Thus, the further touch event falls outside the area determined at step 208 and a new area is determined based on the X and Y location of the further touch event and the X and Y location of the one of the first touch event and second touch event that is located farthest from the further touch event detected at step 212. For the purpose of the present example, the further touch event is located above the area in the orientation shown in Figure 9 and therefore farthest from the second touch event. Therefore, the new area boundaries are set based on the location of the second touch event and the location of the further touch event.

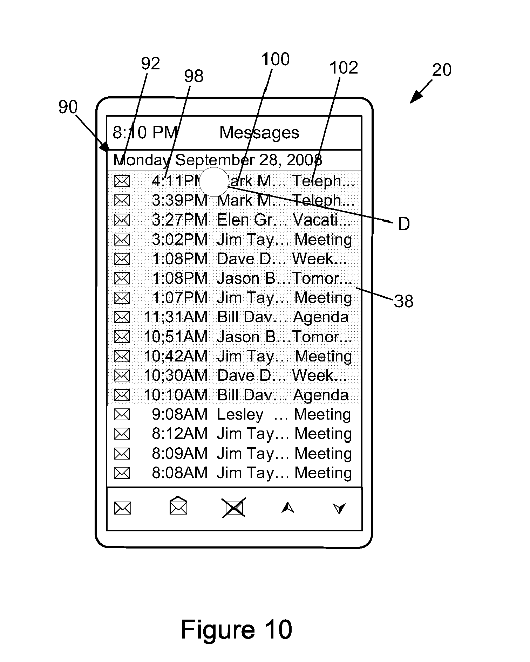

The features that are located within the new boundaries determined at step 218 are then selected as the method proceeds to step 210. Again, the selected features can be highlighted on the display 32. Features that were not previously selected and that fall within the new area boundaries as determined at step 218 are therefore selected, as shown in Figure 10.

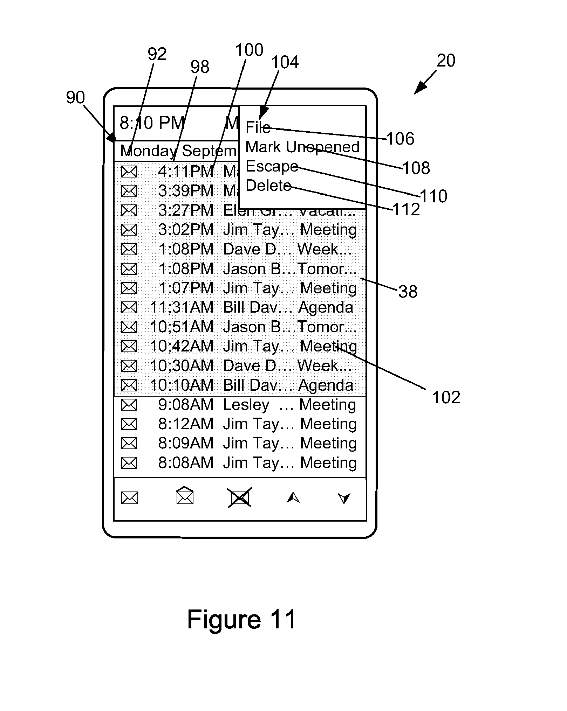

For the purpose of the present example, no further touch locations are determined, and instead, a selection of an option is received at step 222. A submenu list of options can be displayed, for example, upon actuation of the switch 39. Thus, pressing on the touch screen display 38 with sufficient force to displace the touch screen display 39 relative to the base 82 and cause actuation of the switch 39 can result in rendering of the submenu list of options 104, as shown in Figure 11. In the present example, the submenu list of options 104 includes the options to "File" 106, "Mark Unopened" 108, "Escape" 110 and "Delete" 112. Thus, the processor 22 receives input from the mechanical switch 39 and, in response, the submenu list of options 104 is provided. The selected one of the options from the submenu list of options 104 is then selected upon, for example, detection of a touch at one of the options in the submenu list of options 104 and receipt of a further input from the switch 39. Thus, user-selection can be carried out by touching the touch screen display 38 at the X and Y location corresponding to the desired option and again pressing the touch screen display 38 with force sufficient to overcome the bias of the touch screen display 38 and the actuation force of the switch 39.

The associated function is determined based on the X and Y location of the touch in the submenu list of options 104 and the associated function is performed based on the selection received (step 224). Each of the options in the submenu list of options 104 as shown in exemplary Figure 11 can be associated with a different function. For example, the option to "File" 106 can be associated with a function to file the messages in a folder. The option to "Mark Unopened" 108 can be associated with a function to mark each of the selected messages as unopened. The option to "Escape" 110 can be associated with an option to escape from the submenu list of options 104 to return to step 212, for example. The option to "Delete" 112 can be associated with an option to delete each of the selected messages. It will be appreciated that the submenu list of options 104 can include any suitable options and is not limited to the exemplary options described. Further, the options can be provided and selected in any suitable manner.

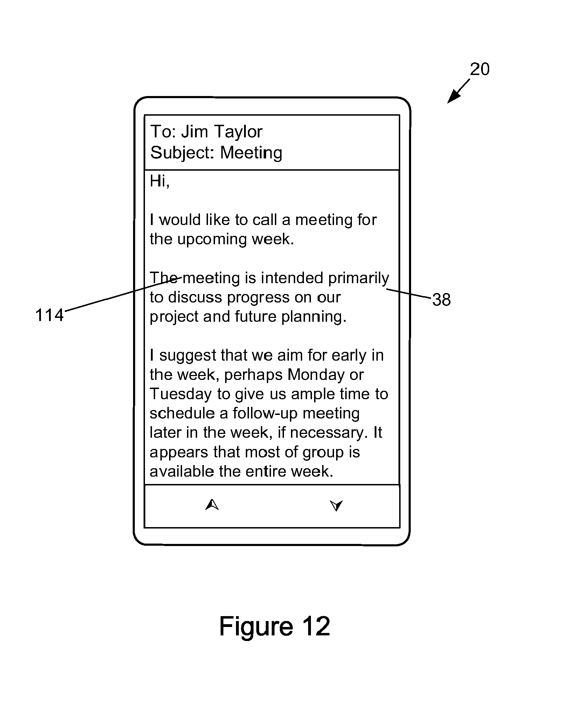

Continued reference is made to Figure 4 with reference to Figures 12 to 15.

In the exemplary screen shown in Figure 12, the touch screen display 38 includes a number of selectable features. In the present example, the selectable features include data in the form of text in an application such as an electronic mail application or any other suitable application.

Again, a user's touch on the touch screen display 38 is determined by determining the X and Y touch location and user-selected input is determined based on the X and Y touch location and the application executed by the processor 22. In the exemplary screen shown in the view of Figure 12, the application provides the text 114 and any character or characters of the text 114 can be selected (step 200).

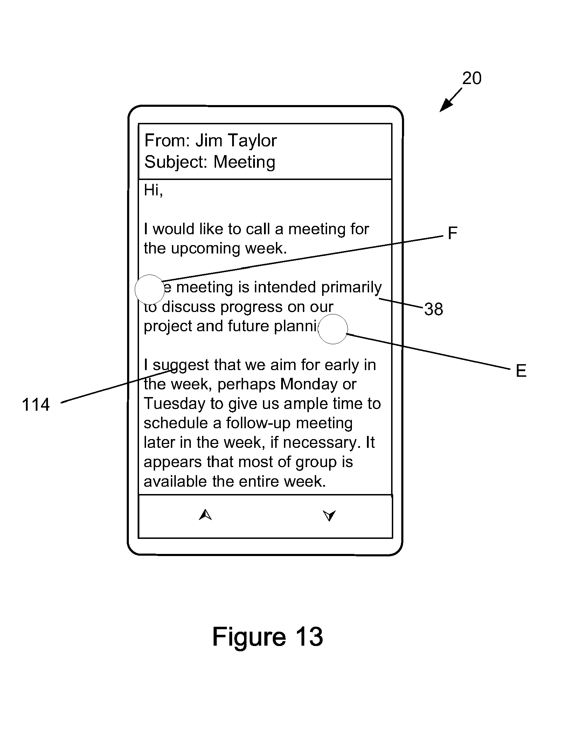

A first touch is detected, at any location on the touch screen display 38. The touch event is detected upon a user touch at the touch screen display 38 at, for example, the location labeled "E" in Figure 13. Signals are sent from the touch-sensitive overlay 34 to the controller 36 and the X and Y location of the touch are determined (step 202).

Next, a second touch event is detected at a second location on the touch screen display 38 while touch contact at the first touch location is maintained (step 208). For exemplary purposes, the location of the second touch event is at the location labeled "F" in Figure 13. Signals are again sent from the touch-sensitive overlay 34 to the controller 36 when the second touch event occurs at a second location while the first touch event is maintained at the first location. Thus, the second touch event at the second location is detected and the X and Y location of the touch are determined (step 204).

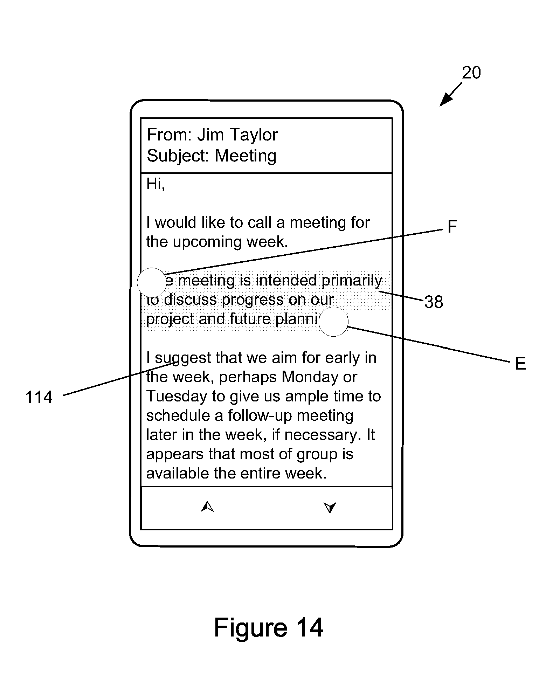

The area boundaries are then determined based on the X and Y location of the first touch event and the X and Y location of the second touch event. In the present example, the boundaries are set by the X and Y locations of both touch events and all of the text located from the upper-most touch location to the lower-most touch location, inclusive, is selected (step 210). It will now be appreciated that in the present embodiment, the area boundaries do not necessarily form a rectangle around the wrapped text due to the wrapping of the text. A visual indicator can be rendered for indicating the selected text. In the present example, all of the selected text is highlighted as shown in Figure 14.

Further touch events can again be detected and new boundaries set, as described above with reference to Figure 4.

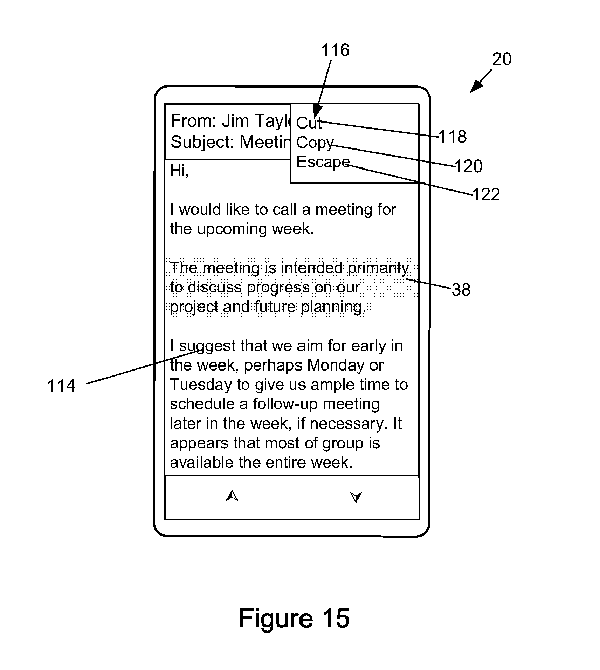

For the purpose of the present example, no further touch locations are determined, and instead, a selection of an option is received at step 222. A submenu list of options can be displayed, for example, upon actuation of the switch 39. Thus, pressing on the touch screen display 38 with sufficient force to displace the touch screen display 39 relative to the base 82 and cause actuation of the switch 39 can result in rendering of the submenu list of options 116, such as that shown in Figure 15. Again, the submenu list of options 116 can include any suitable options. In the present example, the submenu list of options 116 includes the options to "Cut" 118, "Copy" 120, and to "Escape" 122.

Selection of one of the options from the submenu list of options 116 is then received upon, for example, detection of a touch at one of the options in the submenu list of options 104 and receipt of a further input from the switch 39. Thus, user-selection can be carried out by touching the touch screen display 38 at the X and Y location corresponding to the desired option and again pressing the touch screen display 38 with force sufficient to overcome the bias of the touch screen display 38 and the actuation force of the switch 39.

The associated function is determined based on the X and Y location of the touch in the submenu list of options 116 and the associated function is performed based on the selection received (step 224).

In an alternative embodiment, the boundaries of the text area can be changed by, sliding the touch from the X and Y location of the first touch event or sliding the touch from the X and Y location of the second touch event, or both, to include further text or to exclude text as the selected text can be redefined to include the text between the first X and Y location of touch and the second X and Y location of touch. The movement of one finger to redefine the selected text can be carried out while maintaining touch contact of both fingers with the touch screen display 38 or after removing one finger from the touch screen display. Thus, the user can slide his or her finger(s) to redefine the touch area. In this embodiment, it is contemplated that a separate touch event within the area boundaries defined by the first touch location and second touch location can cause a function to be performed such as rendering of a list of options including options such as cut, copy, delete or any other suitable options. A separate touch event outside the area boundaries defined by the first and second touch location can clear the highlighted text, therefore deselecting the text.

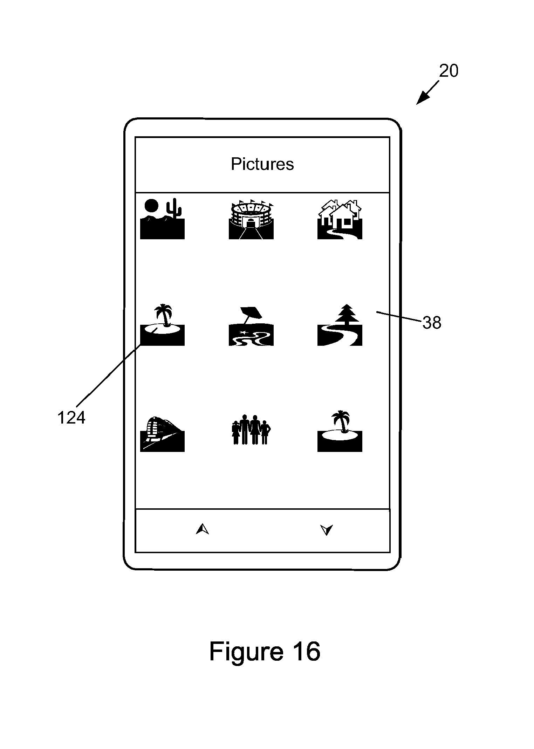

Reference is now made to Figures 16 to 22 to describe yet further example of a method of controlling the portable electronic device 20. In the exemplary screen shown in Figure 16, the touch screen display 38 includes a number of selectable features. In the present example, the selectable features include thumbnails 124 of pictures stored on the portable electronic device 20. The thumbnails 124 can be provided, for example, in a picture viewing application, for example (step 200).

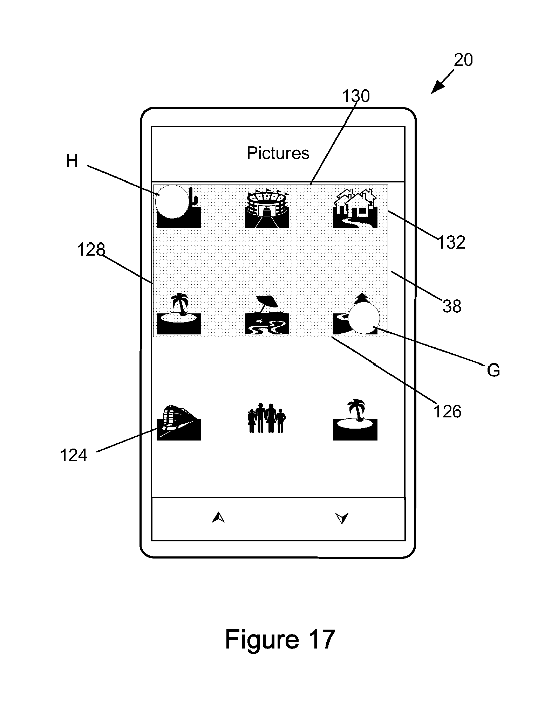

A first touch is detected, at any location on the touch screen display 38. The touch event is detected upon a user touch at the touch screen display 38 at, for example, the location labeled "G" in Figure 17. Signals are sent from the touch-sensitive overlay 34 to the controller 36 and the X and Y location of the touch are determined (step 202).

Next, a second touch event is detected at a second location on the touch screen display 38 while touch contact at the first touch location is maintained (step 208). For exemplary purposes, the second touch event is at the location labeled "H" in Figure 17. Signals are again sent from the touch-sensitive overlay 34 to the controller 36 when the second touch event occurs at the second location while the first touch event is maintained at the first location. Thus, the second touch event at the second location is detected and the X and Y location of the touch are determined (step 204).

The area boundaries are then determined based on the X and Y location of the first touch event and the X and Y location of the second touch event. In the present example, the boundaries are set to form a rectangular area with each side of the rectangle defined by the touch event closest to each side. Thus, the upper-most touch sets the upper-most boundary while the lower-most touch sets the lower-most boundary. Similarly, each of the right and left side boundaries are set based on the right and leftmost touches. It will therefore be appreciated that each touch event sets a pair of boundaries of the rectangular area and the pair of boundaries that are set depends on the relative locations of each of the touch events. For the purpose of the present example, the first touch event sets the lower boundary 126 and left side boundary 128 while the second touch event sets the upper boundary 130 and right side boundary 132 in the orientation shown in Figure 17.

All of the thumbnails 124 that are located within the rectangular area having the boundaries 126, 128, 130, 132 are selected (step 210). A visual indicator can be rendered for indicating the selected thumbnails. In the present example, each of the selected thumbnails is highlighted as shown in Figure 17.

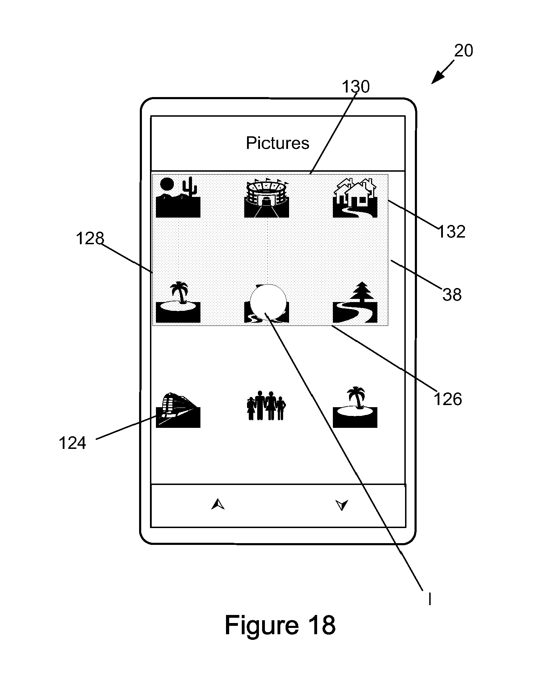

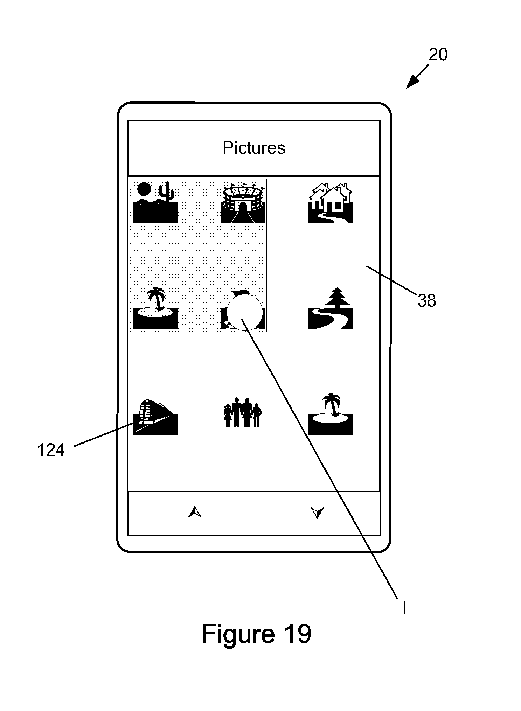

For the purpose of the present example, a further touch event is detected and the X and Y location of the touch are determined (step 212). For exemplary purposes, the location of the further touch event is labeled "I" in Figure 18. The X and Y location of the further touch is compared to the boundaries determined at step 208, the location is determined to fall within the boundaries determined at step 208 (step 214) and therefore new boundaries are set by the X and Y location of the further touch event and the X and Y location of the upper-most touch event in the rendered orientation, which in the present embodiment is the second touch event (step 216). The thumbnails that are located within the new boundaries determined at step 216 are then selected as the method proceeds to step 210. Again, the selected features are highlighted on the display 32. The features previously selected that no longer fall within the new area boundaries as determined at step 216 are therefore deselected as shown in Figure 19.

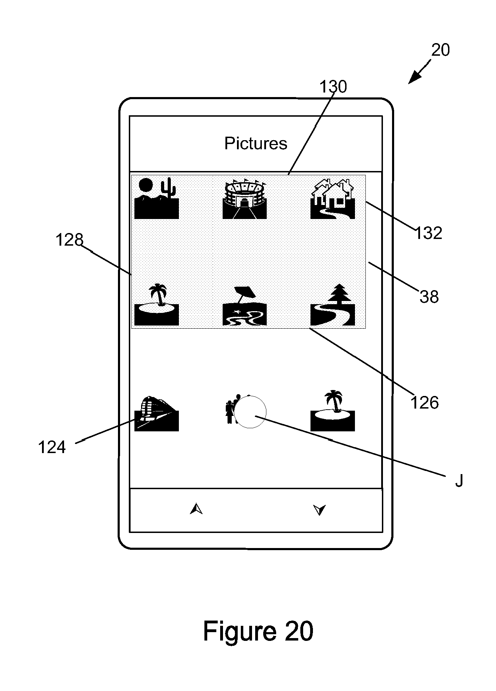

In another example, the further touch event from Figure 17 is detected and the X and Y location of the touch are determined (step 212). For the purpose of the present example, the location of the further touch is labeled "J" in Figure 20 and, as shown, the location of the further touch event does not fall within the area with boundaries set based on the locations of the first and second touch events. It is therefore determined that the further touch event falls outside of the boundaries and new area boundaries are determined based on the X and Y location of each of the further touch event and the one of the first and second touch events that is farthest from the further touch event (step 218). Thus, the further touch event falls outside the area determined at step 208 and a new area is determined based on the X and Y location of the further touch event and the X and Y location of the one of the first touch event and second touch event that is located farthest from the further touch event detected at step 212. For the purpose of the present example, the further touch event is located below the area in the orientation shown in Figure 20 and therefore farthest from the second touch event. Therefore, the new area boundaries are set based on the location of the second touch event and the location of the further touch event.

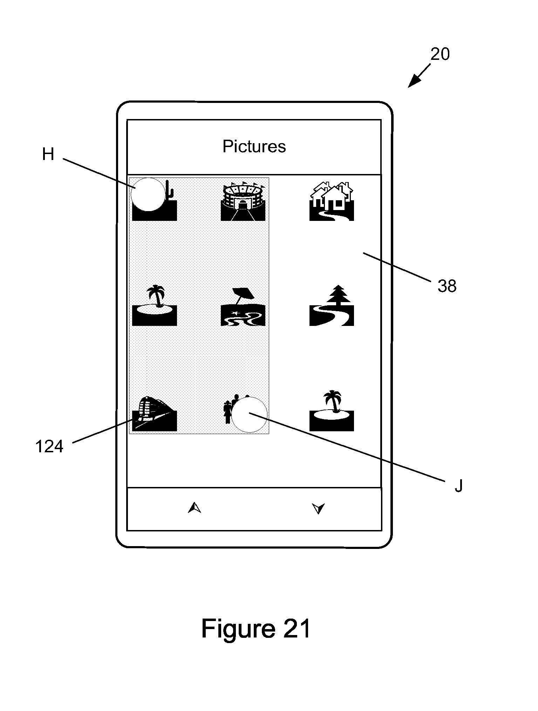

The features that are located within the new boundaries determined at step 218 are then selected as the method proceeds to step 210. Again, the selected features can be highlighted on the display 32. Features that were not previously selected and that fall within the new area boundaries as determined at step 218 are therefore selected, as shown in Figure 21. In the present example other features that were previously selected, as shown in Figure 1, now fall outside of the new boundaries and are therefore deselected.

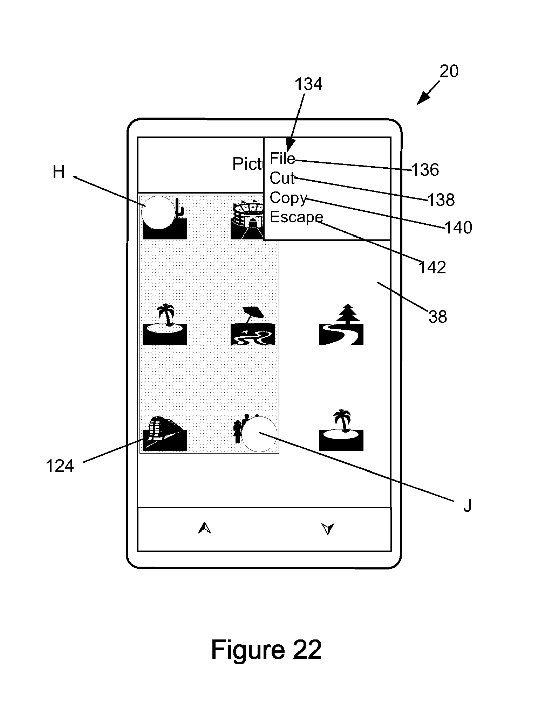

For the purpose of the present example, no further touch locations are determined, and instead, a selection of an option is received at step 222. Again, a submenu list of options 134 can be displayed, for example, upon actuation of the switch 39, as shown in Figure 22. The submenu list of options 134 can include any suitable options such as the options to "File" 136, "Cut" 138, "Copy" 140 and "Escape" 142. Thus, the processor 22 receives input from the mechanical switch 39 and, in response, the submenu list of options 134 is provided. The selected one of the options from the submenu list of options 134 can be selected upon, for example, detection of a touch at one of the options in the submenu list of options 134 and receipt of a further input from the switch 39. Thus, user-selection can be carried out by touching the touch screen display 38 at the X and Y location corresponding to the desired option and again pressing the touch screen display 38 with force sufficient to overcome the bias of the touch screen display 38 and the actuation force of the switch 39.

Upon receipt of the selection, the associated function is determined based on the X and Y location of the touch in the submenu list of options 134 and the associated function is performed based on the selection received (step 224).

Although not shown in the present examples, the further touch event can also be detected on the touch screen display 38 after scrolling up or down to render further selectable features. Thus, multiple features can be selected including multiple features that are not all rendered on the touch screen display 38 at any one time. Therefore the selected features remain selected during a user touch event on a scrolling option, icon or scroll bar, for example, prior to detection of the further touch event as described above with reference to step 212.

The control of the device permits selection of multiple features and operation of functions on the features as a group. The features can include, a list of features such as a list of electronic messages, contacts, tasks, calendar events or any other suitable features. The features can also include words or letters of text such as a paragraph or parts thereof, icons, thumbnail views or any other suitable features. Additional features can be added to the selected features including features not originally rendered on the screen due to screen size or number of selectable features. Features can also be removed from the selected features. Functions can be applied to the features as a group rather than individually applying such functions to each of the features. Thus, groups of features can be, for example, deleted, cut, copied (and pasted) or any other suitable function. Applying such functions to a group reduces the number of screens and menus rendered and saves time of device use, thereby decreasing power requirements and increasing battery life. Further still, additional devices such as a scroll wheel, trackball or buttons are not required for selection on the touch screen display.

While the embodiments described herein are directed to particular implementations of the portable electronic device and the method of controlling the portable electronic device, it will be understood that modifications and variations may occur to those skilled in the art. All such modifications and variations are believed to be within the sphere and scope of the present disclosure.

## Claims

1. A method of controlling a portable electronic device having a touch screen display, the method comprising:
rendering a graphical user interface including a plurality of selectable features;
detecting a first touch event at a first location on the touch screen display;
detecting a second touch event at a second location on the touch screen display during the first touch event; and
selecting ones of the plurality of selectable features located in an area having boundaries defined by the first location and the second location to define a group of selected features.

2. The method according to claim 1, wherein selecting ones of the plurality of selectable features comprises selecting ones of the plurality of selectable features located within a rectangle defined by the first location and the second location.

3. The method according to claim 2, wherein the first location and the second location define opposing corners of the rectangle.

4. The method according claim 1, wherein selecting ones of the plurality of selectable features includes selecting selectable features located partially in the area having boundaries defined by the first location and the second location.

5. The method according to any preceding claim, comprising detecting a further touch event at a third location on the touch screen display; and
if the third location is within the area having boundaries defined by the first location and the second location, deselecting ones of the group of selected features that are not located in a new area having new boundaries defined by the third location and an upper one of the first location and the second location in a rendered orientation.

6. The method according to claim 5, wherein if the third location is outside the area having boundaries defined by the first location and the second location, selecting further ones of the selectable features located in an additional area having a boundary defined by the third location and a farthest one of the first location and the second location.

7. The method according to claim 6, wherein selecting further ones of the plurality of selectable features includes selecting a further selectable feature located at the third position.

8. The method according to any preceding claim, comprising rendering a plurality of selectable options in response to receipt of input from a switch actuated by movement of the touch screen display relative to a back of the portable electronic device.

9. The method according to any preceding claim, wherein said selectable features comprise a list of selectable features and selecting ones of the plurality of selectable features located in a area having boundaries defined by the first location and the second location comprises selecting features in the list from the first location to the second location.

10. A portable electronic device comprising:
a touch screen display; and
functional components including a processor connected to the touch screen display, and a memory device for storage of computer-readable program code executable by the processor for performing the steps of the method of any preceding claim

11. A computer-readable medium having computer-readable code embodied therein for execution by a processor in a computing device for causing to the device to implement the steps of the method of any one of claims 1 to 9.

## Amended claims

### Amended claims in accordance with Rule 137(2) EPC.

**1.** A method of controlling a portable electronic device (20) having a touch screen display (38), the method comprising:
rendering a graphical user interface including a plurality of selectable features;
detecting a first touch event at a first location on the touch screen display (38);
detecting a second touch event at a second location on the touch screen display (38) during the first touch event;
selecting any of the plurality of selectable features that are located in area having boundaries defined by the first location and the second location to define a group of selected features;
detecting a further touch event at a third location on the touch screen display (38); and
if the third location is within the area having boundaries defined by the first location and the second location, deselecting any of the group of selected features that are not located in a new area having new boundaries defined by the third location and an upper one of the first location and the second location in a rendered orientation.

**2.** The method according to claim 1, wherein selecting any of the plurality of selectable features comprises selecting any of the plurality of selectable features located within a rectangle defined by the first location and the second location.

**3.** The method according to claim 2, wherein the first location and the second location define opposing corners of the rectangle.

**4.** The method according to claim 1, wherein selecting any of the plurality of selectable features includes selecting selectable features located partially in the area having boundaries defined by the first location and the second location.

**5.** The method according to any preceding claim, wherein if the third location is outside the area having boundaries defined by the first location and the second location, further selecting any of the selectable features located in an additional area having a boundary defined by the third location and a farthest one of the first location and the second location.

**6.** The method according to claim 5, wherein further selecting any of the plurality of selectable features includes selecting a further selectable feature located at the third position.

**7.** The method according to any preceding claim, comprising rendering a plurality of selectable options in response to receipt of input from a switch actuated by movement of the touch screen display relative to a back of the portable electronic device.

**8.** The method according to any preceding claim, wherein the selectable features comprise a list of selectable features and selecting any of the plurality of selectable features located in an area having boundaries defined by the first location and the second location comprises selecting features in the list from the first location to the second location.

**9.** The method according to any preceding claim, wherein the selectable features comprise text and selecting any of the plurality of selectable features located in an area having boundaries defined by the first location and the second location comprises selecting any portion of the text from the first location to the second location.

**10.** A portable electronic device (20) comprising:
a touch screen display (38); and
functional components comprising a processor (22) connected to the touch screen display (38), and a memory device (28, 30) for storage of computer-readable program code executable by the processor (22), the code causing the portable electronic device to render, on the touch screen display (38), a graphical user interface including a plurality of selectable features comprising any one of text, a list, icons and thumbnail views, detect a first touch event at a first location on the touch screen display (38), detect a second touch event at a second location on the touch screen display (38) during the first touch event, select any of the plurality of selectable features that are located in area having boundaries defined by the first location and the second location to define a group of selected features, detect a further touch event at a third location on the touch screen display (38), and if the third location is within the area having boundaries defined by the first location and the second location, deselect any of the group of selected features that are not located in a new area having new boundaries defined by the third location and an upper one of the first location and the second location in a rendered orientation.

**11.** A computer-readable medium having computer-readable code embodied therein for execution by a processor (22) in a computing device (20) for causing to the device (20) to implement the steps of the method of any one of claims 1 to 8.
